# EUROPEAN PATENT SPECIFICATION

(11) **EP 2 207 282 B1**
(45) Date of publication and mention of the grant of the patent: **27.09.2017**
(21) Application number: 10150367.0
(22) Date of filing: 08.01.2010
(51) Int. Cl.: H04H 20/65, H04H 40/27, H04L 5/00

(54) **Method of transmitting and receiving a broadcast signal and apparatus for transmitting and receiving a broadcast signal**
Verfahren zum Senden und Empfangen eines Rundfunksignals und Vorrichtung zum Senden und Empfangen eines Rundfunksignals
Procédé de transmission et de réception d'un signal de télédiffusion et appareil de transmission et de réception d'un signal de télédiffusion

(30) Priority: 08.01.2009 US 143406 P; 04.02.2009 US 149996 P
(43) Date of publication of application: 14.07.2010
(73) Proprietor: LG Electronics Inc., Seoul 150-721 (KR)
(72) Inventor: Moon, Sang Chul, Seoul 137-724, (KR); Suh, Jong Yeul, Seoul 137-724, (KR); Hong, Ho Taek, Seoul 137-724, (KR); Ko, Woo Suk, Seoul 137-724, (KR); Kim, Kyung Ho, Seoul 137-724, (KR); Song, Jae Hyung, Seoul 137-724, (KR); Lee, Joon Hui, Seoul 137-724, (KR); Kim, Jin Pil, Seoul 137-724, (KR)
(74) Representative: Cabinet Plasseraud

(56) References cited:
- WO-A1-2007/073094
- WO-A1-2007/083940
- DVB PROJECT: "Frame structure channel coding and modulation for a second generation digital terrestrial television broadcasting system (DVB-T2)", INTERNET CITATION, June 2008 (2008-06), pages 1-158, XP002546005, Retrieved from the Internet: URL:http://www.dvb.org/technology/dvbt2/a1 22.tm3980r5.DVB-T2.pdf [retrieved on 2009-09-15]
- "Digital Video Broadcasting (DVB); Frame structure channel coding and modulation for a second generation digital transmission system for cable systems (DVB-C2)", EUROPEAN STANDARD (TELECOMMUNICATIONS SERIES), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.1.1, 1 July 2009 (2009-07-01), XP014044394,

## Description

### BACKGROUND OF THE INVENTION

### Field of the Invention

The present invention relates to a method of transmitting and receiving a signal and an apparatus for transmitting and receiving a signal.

### Description of the Related Art

The present invention provides a method for transmitting one service through multiple data slices, which are configured using a channel bonding scheme in a digital broadcast. Particularly, the present invention relates to a method for transmitting baseline stream and extended stream through most optimally configured data slice according to various purposes of Scalable Video Coding (SVC), 3 Dimensional (3D) image or the like.

A current digital TV broadcasting transmission technology is progressing for the purpose of deriving the maximum efficiency in the same frequency band out of an issue that converts an analog signal into a digital signal. Accordingly, from the existing Digital Video Broadcasting-Satellite (DVB-S) and Digital Video Broadcasting-Terrestrial (DVB-T), Europe defines a transmission standard called DVB-S2/T2, and improves a transmission rate by 30% to 50% relative to the existing scheme through the transmission standard. These are being practically applied.

In accordance with such a background, cable broadcasting also proposes new requirements that have been further advanced than the existing Digital Video Broadcasting-Cable (DVB-C). Particularly, because of characteristic in which there is much retransmission from terrestrial broadcasting or satellite broadcasting, the requirements of DVB-C2 has been defined for increasing transmission efficiency while maximally reusing the structure of DVB-S2/T2. DVB-C2 standardization for implementing this is in progress.

As the feature of the DVB-C2, a concept has been introduced that integrates and uses adjacent Radio Frequency (RF) bands through a channel bonding scheme while maximally applying the transmission structure of the existing DVB S2/T2, thereby minimizing waste by a guard frequency. Accordingly, the importance of a channel having identical band becomes lower. This is replaced by a concept, called the data slice of a variable bandwidth.

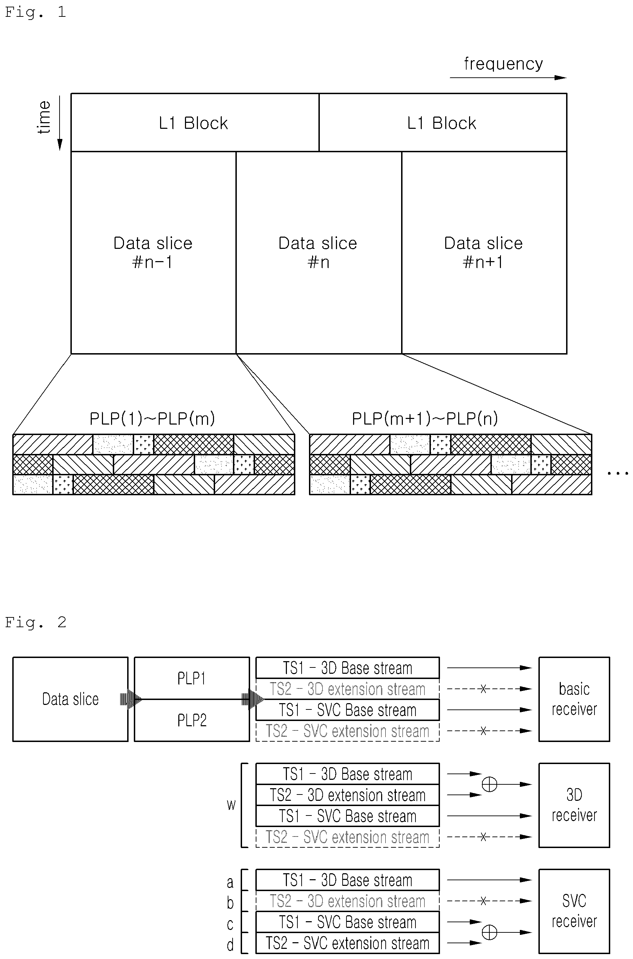

Fig. 1 is a diagram illustrating a channel bonding configuration used in the DVB-C2 standard. Data slices having a variable frequency width with respect to the frequency band are shown in Fig. 1, and multiple PLPs are included in the data slices to be transmitted (PLP is an abbreviation of Physical Layer Pipe, which is a concept proposed in DVB-T2).

Basically, one PLP corresponds to one transport stream and one service, and thus multiple services are included in each data slice to be transmitted.

However, based on this concept, in case of services that should introduce an extended stream such as 3D and SVC, unnecessary stream should be transmitted in the same PLP and data slice as those of a base stream in a receiver that does not support corresponding functions, thereby occupying bandwidth.
Document: DVB project: "Frame structure channel coding and modulation for a second generation digital terrestrial television broadcasting system (DVB-T2)'\ Internet Citation June 2008 (2008-06) pages 1-158 discloses a frame structure channel coding and modulation system for digital transmission. WO2007/083940 and WO2007/073094 each disclose methods for transmitting and receiving digital television data.

### SUMMARY OF THE INVENTION

Embodiments provide a method of transmitting and receiving a signal and an apparatus for transmitting and receiving a signal capable of data slice multiplexing that enables one service to be divided into multiple data slices to be transmitted.

Accordingly, the present invention is directed to a method of transmitting and receiving a signal and an apparatus for transmitting and receiving a signal that substantially obviate one or more problems due to limitations and disadvantages of the related art.

An aspect of the present invention provides a method of receiving broadcasting signal according to claim 1.

Another aspect of the present invention provides an apparatus for receiving broadcasting signal according to claim 4.

Yet another aspect of the present invention provides a method of transmitting broadcasting signal according to claim 7.

Yet another aspect of the present invention provides an apparatus for transmitting broadcasting signal according to claim 10.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
Fig. 1 shows structure of data slice and Physical Layer Pipe (PLP).
Fig. 2 is a conceptual diagram showing 1-PLP to 1-service transmission.
Fig. 3 is a conceptual diagram showing multi-PLP to 1-service transmission.
Fig. 4 is a conceptual diagram showing multi-PLP/multi-data slice to 1-service transmission.
Fig. 5 shows an example of NIT with detailed syntax.
Fig. 6 shows an example of C2_data slice_multiplex_descriptor with detailed syntax.
Fig. 7 shows an example of signaling format for data slice multiplex type.
Figs. 8-10 show examples of signaling format for SVC layer type.
Figs. 11 and 12 are flowcharts illustrating a method of receiving a signal in a receiver according to an embodiment of the present invention.
Fig. 13 shows an apparatus for receiving a signal according to an embodiment of the present invention.
Fig. 14 shows another example of NIT with detailed syntax.
Fig. 15 is a block diagram illustrating supporting of data slice multiplex of a transmitting side according to an embodiment of the present invention.
Fig. 16 is a block diagram illustrating supporting of data slice multiplex of a receiving side according to an embodiment of the present invention.
Fig. 17 shows a TS loop configuration method of NIT according to an embodiment of the present invention.
Fig. 18 shows detailed structure of c2_dslice_multiplex_descriptor according to an embodiment of the present invention.
Figs. 19 and 20 are flowcharts illustrating a process of searching broadcasting services in a receiver system according to an embodiment of the present invention.

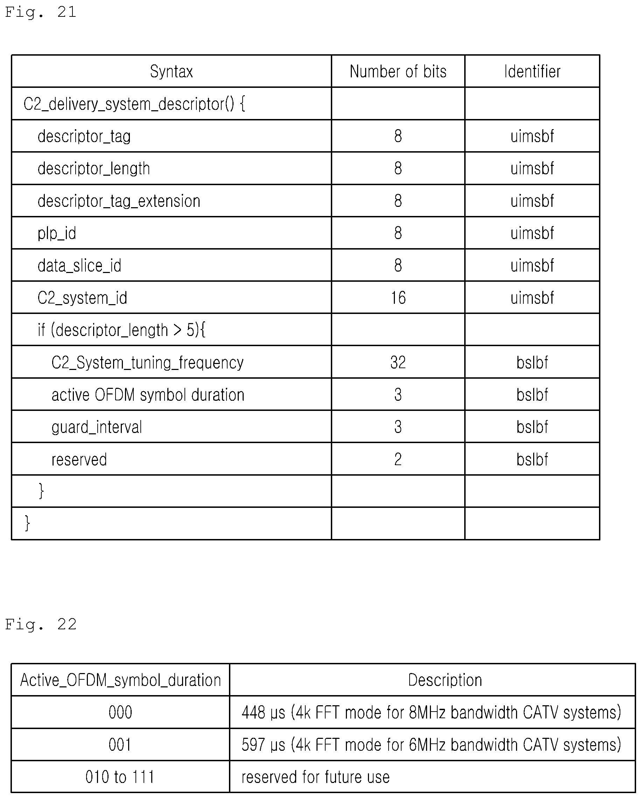

Fig. 21 shows another example of C2 delivery system descriptor (C2dsd) with detailed syntax.
Fig. 22 shows an example of signaling format for the active OFDM symbol duration values.

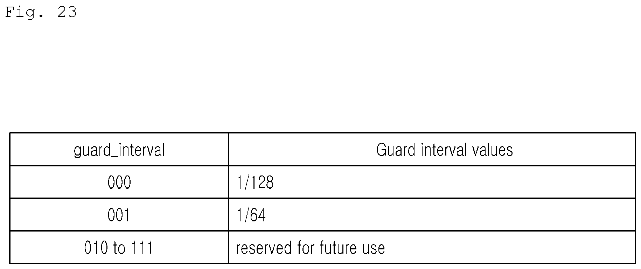

Fig. 23 shows an example of signaling format for the guard interval values.
Fig. 24 shows an apparatus for transmitting broadcasting signal according to another embodiment of the present invention.
Fig. 25 is a flow chart illustrating a method of transmitting broadcasting signal according to another embodiment of the present invention.
Fig. 26 shows an apparatus for receiving broadcasting signal according to another embodiment of the present invention.
Fig. 27 is a flow chart illustrating a method of receiving broadcasting signal according to another embodiment of the present invention.

### DESCRIPTION OF THE PREFERRED EMBODIMENTS

References will now be made in detail to the preferred embodiments of the present invention, examples of which are illustrated in the accompanying drawings.

In the following description, the term "service" is indicative of either broadcast contents which can be transmitted/received by the signal transmission/reception apparatus.

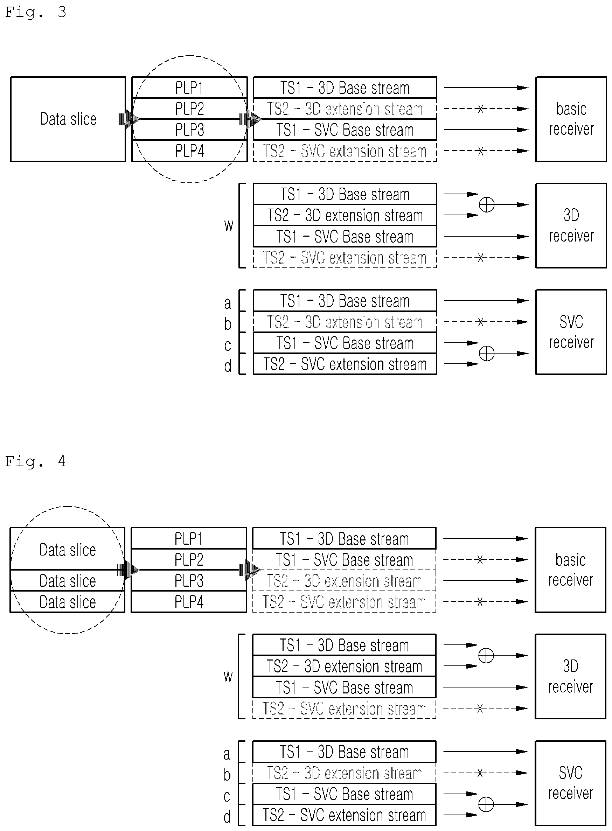

A limitation when SVC or 3D is applied in single-PLP/single-data slice/single-TS structure can be verified in Figs. 2 to 4. Fig. 2 is a conceptual diagram showing 1-PLP to 1-service transmission, Fig. 3 is a conceptual diagram showing multi-PLP to 1-service transmission, and Fig. 4 is a conceptual diagram showing multi-PLP/multi-data slice to 1-service transmission.

Fig. 2 shows that unnecessary extension streams of 3D and SVC are included when a basic receiver that cannot decode SVC/3D stream receives one data slice + one PLP in the single-PLP/single-data slice/single-TS structure. There is a possibility that base service may be transmitted in a broader band using a corresponding band, which may cause a waste because a band should be assigned to a stream that cannot be received.

Since one service should be restricted in one PLP to be transmitted, a base stream and an extended stream should be entered into one PLP in the 3D or SVC service. If the basic receiver receives the data slice, service corresponding to a width of w, actually, only a width of a + c can be provided.

To complement this, Fig. 3 shows that the basic receiver may not receive PLP corresponding to the unnecessary extension stream in multi-PLP/single-data slice/single-TS structure. However, the band is determined by the data slice, and there is a possibility that the base service may be transmitted in a broader band using a corresponding band in the receiving data slice, which may cause a waste because a band should be assigned to a stream that cannot be received.

When one service is allowed to be transmitted in multiple PLPs, only PLP necessary for the receiver can receive. (but multiple tuner is necessary) In this case, a stream decoding upon receipt becomes easier because it is not required to receive an unnecessary stream. However, since the service is provided within the limited width w of the data slice, the width of the basic receiver is limited like Fig. 3.

Accordingly, as shown in Fig. 4, the multi-PLP/multi-data slice/single-TS structure is more rational, which has an advantage that can includes above both cases even in regard to signaling.

When one service is allowed to be transmitted in PLP over multiple data slices, only data slice and PLP necessary for the receiver can receive. (but multiple tuner is necessary) In this case, a stream decoding upon receipt is facilitated because it is not required to receive an unnecessary stream. Also, since all of the basic receiver, 3D receiver, and SVC receiver selectively receive necessary data slices, all can use the service provided to selected data slices sufficiently.

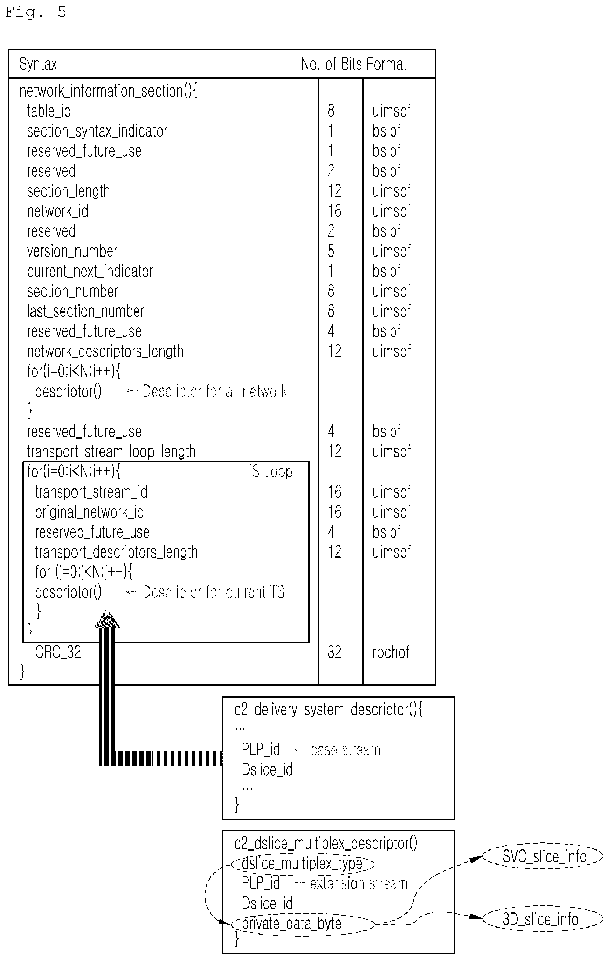

Fig. 5 shows a structure for signaling such a structure. TS loop is included in Network Information Table (NIT) for signaling configuration of TS in Digital Video Broadcasting-Service Information (DVB-SI). In this case, c2dsd (c2_delivery_system_descriptor) is attached to connect PLP_id + data slice_id corresponding to each TS. The present invention optionally introduces c2_dslice_multiplex_descriptor to signal additional PLP_id + data slice_id for the extension stream therein, enabling the multi-PLP/multi-data slice/single-TS structure described above.

NIT is configured with several Transport Stream (TS) information loops. In the present invention, a C2 delivery system descriptor (C2dsd) and C2 dslice multiplex descriptor (C2dsmd) are defined to be attached to the descriptor loop of the TS. Then, the NIT is configured to inform through which PLP of some data slice the TS of a corresponding loop is transmitted. That is, a PLP corresponding to an identifier of PLP (plp_id) for the base stream in the c2dsd is transmitted in a data slice corresponding to an identifier of data slice (dslice_id) in the C2dsd. And, a PLP corresponding to an identifier of PLP (plp_id) for the extension stream in the c2dsmd is transmitted in a data slice corresponding to an identifier of data slice (dslice_id) in the C2dsmd. This is a structure capable of knowing that the corresponding TS is transmitted through the PLP.

In the TS loop, the identifier of a TS (transport_stream_id) and the identifier of a network (original_network_id) uniquely divides a corresponding TS. Broadcasting service provided through the TS is signaled through Service Description Table (SDT). At this point, the transport_stream_id and original_network_id of the NIT are connected to the transport_stream_id and original_network_id pair of the SDT, and inform through which TS a service list represented as the identifier of a service (service_id) of the SDT is provided.

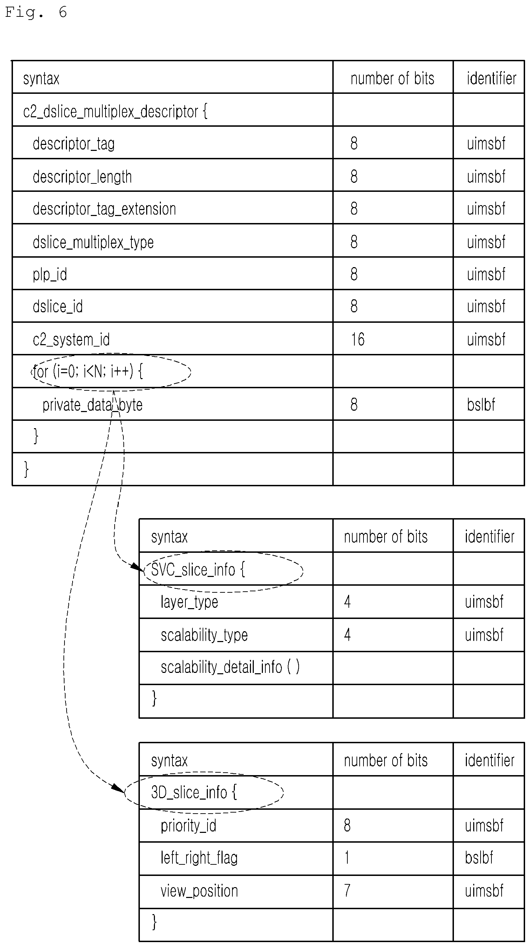

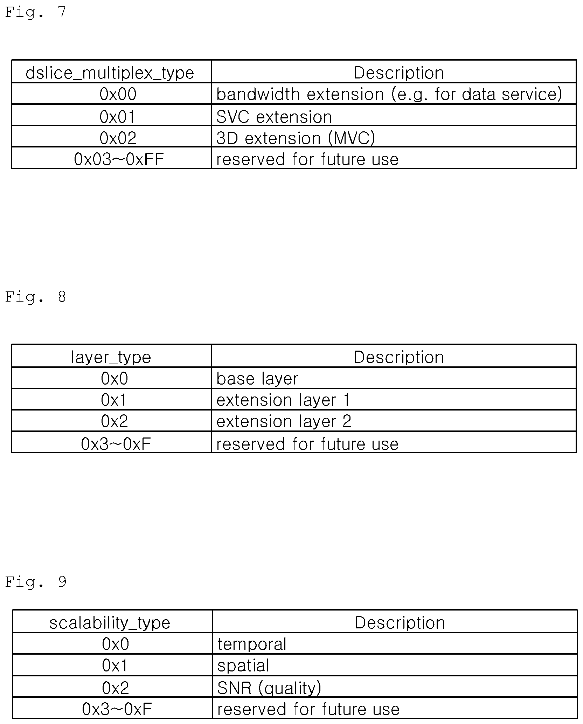

Fig. 6 shows a detailed structure of the c2_dslice_multiplex_descriptor. The meanings of the respective fields are as follows.
-dslice_multiplex_type: this indicates the type of an extension stream to be transmitted through data slice multiplex. Detailed types are shown in Fig. 7, which may be set to simple bandwidth extension (ex, for data service), SVC extension, and 3D extension for Multi-view Video Coding (MVC).
-plp_id: this indicates PLP id and data slice id in which extension stream is transmitted.
-c2_system_id: this indicates id of c2 system where transmission is performed. This has the same value as that of c2_system_id of c2dsd.
-private_data_byte: this is used for signaling of additionally necessary information according the dslice_multiplex_type. The present invention provides SVC_slice_info and 3D_slice_info as an embodiment in regard to SVC and 3D broadcasting.

### [SVC_slice_info]

- layer_type: this indicates which number of extension stream is in SVC. See Fig. 8.
- scalability_type: this indicates what method is used among scalability applied in the SVC for coding. See Fig. 9.

### [3D_slice_info]

- priority_id: this provides information on which is selected from receivable extension streams when multi-view output function of 3D TV receiver is restricted. For example, two streams having higher priority are selected for decoding and outputting in a receiver having a stereoscopic display. A lower priority_id value means higher priority, which may not be redundant in regard to streams constituting the same service.
- left_right_flag: this indicates whether Extended View video stream is right or left on the basis of base view. If it is a left view on the basis of the base view, the value is '0', and if it is a right view, the value is '1'. In the base view (priority_id=0), this field is ignored.
- view_position: this indicates which number of left or right camera has recorded in a horizontal direction on the basis of the base view, or which number of multi-view plane data is outputted to. This field has no meaning in the stereoscopic video stream.

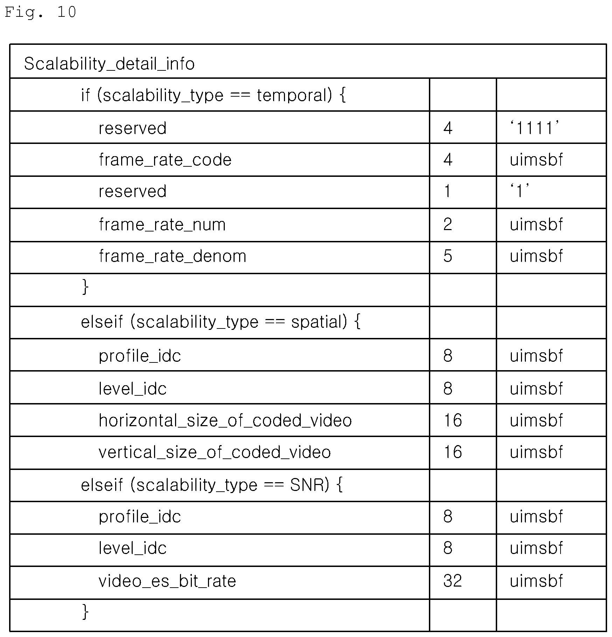

A field to be used varies according to the scalability_type as shown in Fig. 10.
- frame_rate_code: this 4-bit field is defined in ISO/IEC 13818-2, and is used to calculate the frame rate of a corresponding scalable video stream. The frame rate of the corresponding stream is calculated as follows: frame_rate = frame_rate_value (: an actual frame_rate value extracted from the frame_rate_code) * (frame_rate_num + 1) / (frame_rate_denom + 1). Assignment of this field value is identical to that of ISO/IEC13818-2.
- frame_rate_num: this is used to calculate the frame rate of the corresponding scalable video stream of 2-bit. However, when the frame rate is directly extracted from the frame_rate_code, this field is set to '0'
- frame_rate_denom: this is used to calculate the frame rate of the corresponding scalable video stream of 5-bit. However, when the frame rate is directly extracted from the frame_rate_code, this field is set to '0'.
- profile_idc, level_idc: these mean corresponding AVC/H.264 profile and level value when combining a corresponding stream with the base layer for decoding.
- horizontal_size_of_coded_video, vertical_size_of_coded_video: these indicate the horizontal and vertical sizes of video data by units of pixels.
- video_es_bit_rate: this expresses the bit rate of a corresponding video by units of bit per second.

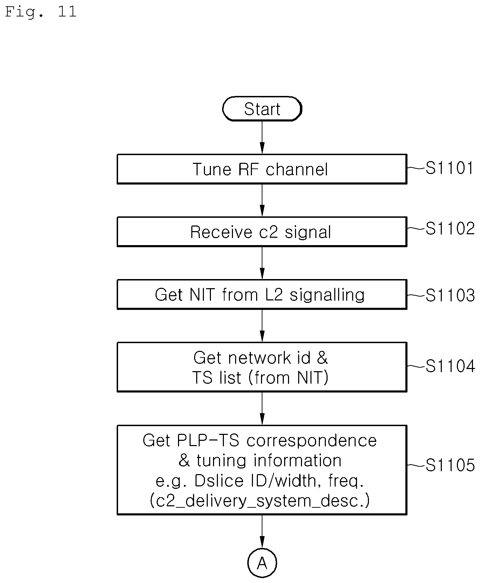

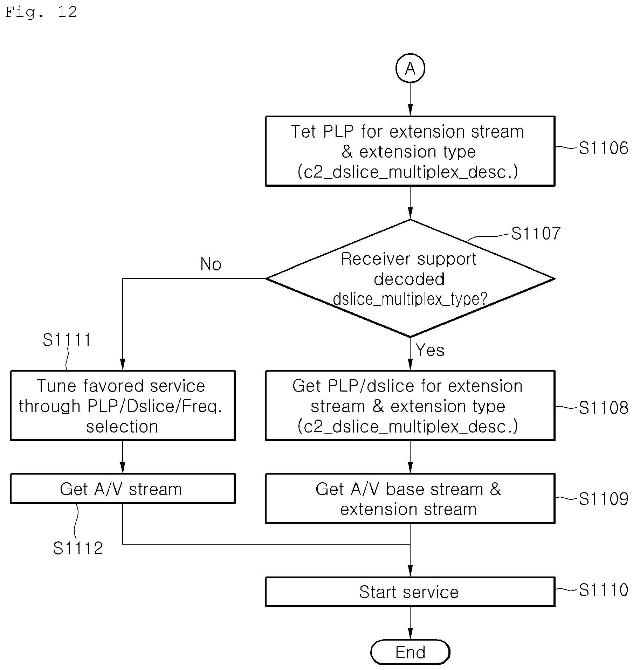

Figs. 11 and 12 are flowcharts illustrating a process of searching broadcasting service in a receiver according to an embodiment of the present invention.

A c2 signal is inputted when a tuner tunes channel (S1101). A receiver receives L1 signaling data transmitted identically regardless of tuning frequency in a signal as shown in Fig. 1 transmitted based on the c2 signal. The total configuration of data slices, PLP configuration included in each data slice and L2 signaling data are found from the Li signaling data (S1102).

PLP including L2 signaling data is received, which includes PSI/SI information such as NIT (S1103).

Network id is verified when NIT is received. TS loop is analyzed to verify plp_id / dslice_id connection information of tsid and c2dsd of each TS. Thus, the connection structure of network ∼ TS ∼ PLP ∼ data slice is found (S1104 and S1105).

In a receiver supporting dslice_multiplex, c2_dslice_multiplex_desc is checked. It is verified whether the receiver supports a corresponding extension stream type, and information on plp_id and dslice_id is decoded. Based on this, related information for connection structure of PLP ∼ data slice and reception corresponding to the extension stream of corresponding TS is found. Based on the corresponding structure, tsid/onid of TS corresponding to each service, PLP information on the corresponding TS transmission, and data slice information on the corresponding PLP transmission are together stored in a channel DB (S1106 to S1109).

When TS is received from the PLP and the extension stream is transmitted, the received stream is decoded according to the types such as SVC and 3D. Watching service starts (S1110)

At S1107, if the receiver cannot support decoded dslice_multiplex_type, then S1111 and S1112 are performed. That is, tune favored service through PLP/Data slice/Freq. selection and get AN stream.

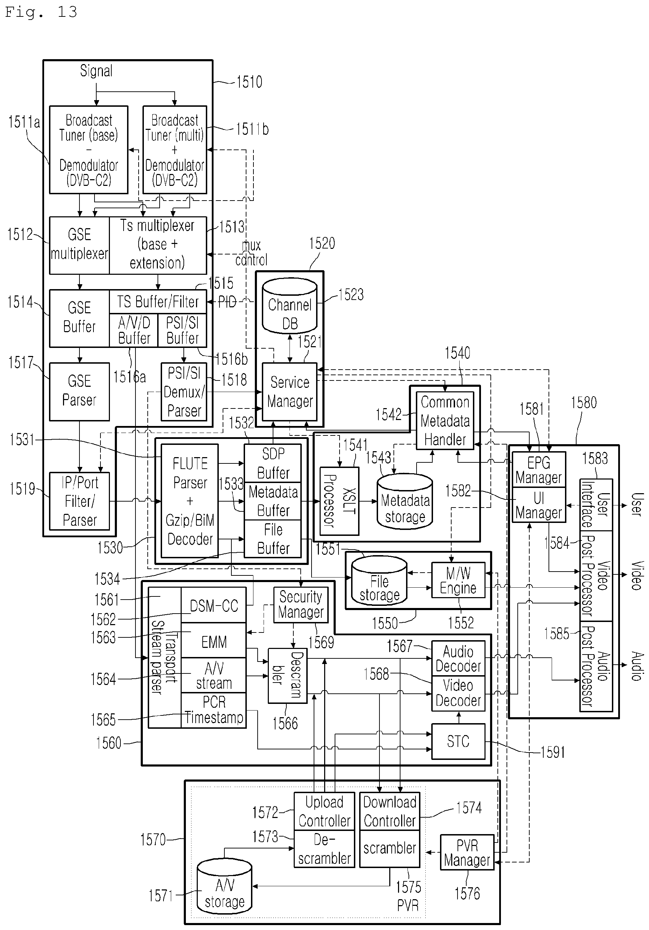

Fig. 13 shows an apparatus for receiving a signal according to an embodiment of the present invention.

Referring to Fig. 13, the receiver of this embodiment includes a frontend unit 1510, service managing unit 1520, File Delivery over Unidirectional Transport (FLUTE) processing unit 1530, metadata processing unit 1540, Middleware (M/W) processing unit 1550, Audio/Video (AN) processing unit 1560, Personal Video Recorder (PVR) processing unit 1570, and input/Output (I/O) processing unit 1580.

The frontend unit 1510 includes a tuner/demodulator 1511a and 1511b, GSE multiplexer 1512, TS multiplexer 1513, GSE buffer 1514, TS buffer/filter 1515, Audio/Video/Data (A/V/D) buffer 1516a, PSI/SI buffer 1516b, GSE parser 1517, PSI/SI demux/parser 1518, and IP/Port filter/parser 1519. The frontend unit 1510 receives a broadcasting signal and decodes the received signal in an appropriate type according to a transmission scheme to output a Generic Stream Encapsulation (GSE) or Transport Stream (TS) packet.

The tuner/demodulator 1511a and 1511b receives a broadcasting signal and outputs the received signal in a stream type. In the case of DVB-C2, GSE or TS is outputted. The GSE buffer 1514 buffers and the GSE parser 1517 decodes GSE stream to output it as an IP packet. The TS buffer/filter 1515 buffers and filters TS stream. The Audio/Video/Data buffer 1516a buffers data other than PSI/SI among TS streams and transmits the buffered data to a transport stream parser 1561. The PSI/SI buffer 1516b buffers a PSI/SI signal in the TS stream and the PSI/SI demux/parser 1518 decodes the buffered signal to transfer the decoded signal to a service manager 1521. The IP/Port filter/parser 1519 filters a packet corresponding to a specific IP/Port according to the service access information request of the service manager 1521. At this point, an IP packet that is decoded for each address according to the control of the service manager 1521 is transferred to the FLUTE processing unit 1530. And the tuner/demodulator 1511b, GSE multiplexer 1512, and TS multiplexer 1513 will be described in later with detail as frontend extension module.

The service managing unit 1520 includes the service manager 1521 and a channel Database (DB) 1523. The service managing unit 1520 manages overall system control for service provided by a service provider.

The service manager 1521 manages total services according to the service list and access information that are transferred as metadata. Main functions of the service manager 1521 are as follows.
- The service manager 1521 processes tuner control information such as data slice and PLP, which are transferred in PSI/SI.
- The service manager 1521 processes service access information that is transferred from an SDP parser 1532.
- The service manager 1521 provides the filtering information at the IP/Port filter/parser 1519 according to the service access information. At this point, the service manager 1521 also controls to which processing part an IP packet outputted according to filtering should be transferred (FLUTE, security or A/V).
- The service manager 1521 signals by which Extensible Stylesheet Language Transformations (XSLT) logic processing should be performed when converting metadata by system into a common metadata scheme.
- The service manager 1521 requests, receives and processes all sorts of information of service necessary for a common metadata handler 1542, and selects and stores only information necessary for the channel database (DB) 1523.
- The service manager 1521 processes service-related operations (for example, an operation of changing a channel) necessary in an Electronic Program Guide (EPG) operation.

The channel database 1523 stores service management/change/access-related contents among service-related information for the efficient operation of the service manager 1521, and the contents are frequently inputted and outputted.

The FLUTE processing unit 1530 includes a FLUTE parser and Gzip/BiM decoder 1531, Session Description Protocol (SDP) parser 1532, metadata buffer 1533, and file buffer 1534. The FLUTE processing unit 1530 decodes a file that is encoded according to a FLUTE protocol and transfers the decoded file to a corresponding processing part according to each content format.

The FLUTE parser and Gzip/BiM decoder 1531 decodes a file that is encoded based on the FLUTE protocol, and at this point, performs decompressing according to a compressed scheme to output a file. The content type of the outputted file may be checked on the basis of the File Description Table (FDT) content of the FLUTE protocol. Accordingly, each file is transmitted to the SDP parser 1532, the metadata buffer 1533, or the file buffer 1534 based on the content type. The SDP parser 1532 decodes an SDP file which is the file representing access information and transfers the decoded result to the service manager 1521.

The metadata buffer 1533 buffers metadata which is a kind of Extended Markup Language (XML) file representing overall information associated with service and content. The metadata buffer 1533 also transfers the buffered metadata to an XSLT processor 1541 for converting the metadata into a common metadata format. The file buffer 1534 buffers various files that are used in a middleware, and stores the buffered files in a file storage 1551 of the middleware processing unit 1550. These files may be used by a middleware (M/W) engine 1552. The file buffer 1534 may buffer the files together with a file that is transmitted through a Digital Storage Media Command and Control (DSM-CC) part 1562 of a Transport Stream (TS) parser 1561.

The metadata processing unit 1540 includes the XSLT processor 1541, common metadata handler 1542, and metadata storage 1543. The metadata processing unit 1540 converts metadata that is transferred from the FLUTE processing unit 1530 into a common metadata format being a common format, stores the converted metadata. The metadata processing unit 1540 searches relevant content, and provides the searched result according to the request of each part.

The XSLT processor 1541 converts a metadata into a common metadata by using XSLT based on each transmission scheme, wherein the metadata can be different from each other according to each transmission scheme. The metadata storage 1543 stores the common metadata, and performs search to transfer the searched result according to the request of the common metadata handler 1542. The common metadata handler 1542 searches metadata according to various information requests associated with service, event and access information, and transfers the searched result to the service manager 1521, an EPG manager 1581, and a security manager 1569. The common metadata handler 1542 may store the metadata in connection with PVR data according to the request of a PVR manager 1576.

The middleware processing unit 1550 includes a file storage 1551 and the middleware (M/W) engine 1552. The middleware processing unit 1550 loads a file that is transferred from the FLUTE processing unit 1530 to drive and execute an appropriate application.

The file storage 1551 stores all sorts of files to be used in the middleware engine 1552, and transmits a necessary file according to a request of the middleware engine 1552. The middleware engine 1552 drives middleware such as Advanced Common Application Platform (ACAP), Open Cable Application Platform (OCAP), Multimedia Home Platform (MHP), and Multimedia and Hypermedia information coding Experts Group (MHEG), and receives a necessary file from the file storage 1551 to display a driven application on a screen through a video post processor 1584.

The audio/video (A/V) processing unit 1560 includes the transport stream parser 1561, a descrambler 1566, an audio decoder 1567, a video decoder 1568, the security manager 1569, and a System Time Clock (STC) part 1591. The audio/video processing unit 1560 decodes an AN stream, processes a scramble, and displays it on a screen to be synchronized.

The transport stream (TS) parser 1561 includes the DSM-CC part 1562, an Entitlement Management Message (EMM) part 1563, an AN stream part 1564, and a PCR timestamp part 1565. The transport stream parser 1561 parses a stream that is inputted in the TS type of an MPEG-2 system to divide the stream into an audio stream, a video stream, a data stream, and timing information according to stream types. The DSM-CC part 1562 parses a DSM-CC data stream. The EMM part 1563 parses an entitlement management message which is a Conditional Access System (CAS)-related signal. The AN stream part 1564 parses an audio/video stream. The PCR timestamp part 1565 parses a PCR signal.

The descrambler 1566 descrambles a scrambled stream based on a scramble key value and necessary parameters transmitted from the security manager 1569. The security manager 1569 manages security information associated with CAS such as Conditional Access Table (CAT) among PSI/SI, and transmits descramble information to the descrambler 1566. The audio decoder 1567 decodes an audio stream and the video decoder 1568 decodes a video stream. The System Time Clock (STC) part 1591 provides a reference clock for synchronizing according to a timestamp in A/V stream decoding, and also provides a reference clock for matching a replay speed with a transmitted stream. The STC part 1591 is synchronized with the clock of a server using clock recovery information received from the PCR timestamp part 1565 of the TS parser 1561. In a PVR replay, the STC part 1591 receives a clock from an upload controller 1572.

The PVR processing unit 1570 includes an Audio/Video (AN) storage 1571, the upload controller 1572, a descrambler 1573, a download controller 1574, a scrambler 1575, and the PVR manager 1576. The PVR processing unit 1570 is a part associated with a PVR (or DVR)-related function, i.e., the storage and replay of a stream.

The PVR manager 1576 controls PVR-related operations. That is, the PVR manager 1576 controls the download controller 1574 and upload controller of the PVR processing unit 1570, i.e., controls storage, replay and reserve record. The PVR manager 1576 communicates with the middleware engine 1552 for data broadcasting record. The PVR manager 1576 communicates with a User Interface (UI) manager 1582 for PVR UI. The PVR manager 1576 is connected to the common metadata handler 1542 for storing metadata connected to stored content. The download controller 1574 adds information such as a timestamp and a random access point to an AN stream in stream record, and stores it. The scrambler 1575 performs scrambling for protecting content in stream record. The A/V storage 1571 stores an A/V stream. The descrambler 1573 performs descrambling for replay, to the scrambled content that has been scrambled for protecting the content. The upload controller 1572 transmits information such as the timestamp and the random access point to the STC 1591 and PVR manager 1576, and transmits a stream to the Audio decoder 1567 and video decoder 1568.

The I/O processing unit 1580 includes the EPG manager 1581, UI manager 1582, user interface 1583, video post processor 1584, and audio post processor 1585. The I/O processing unit 1580 is related to a user input and an A/V output.

The EPG manager 1581 receives metadata associated with the display of an EPG from the common metadata handler 1542, processes the metadata in an appropriate format, and blends the processed metadata with a video stream or a middleware application through the UI manager 1582 to display the blended data on a screen. The UI manager 1582 interprets a user's input and requests necessary operations in connection with the service manager 1521, EPG manager 1581, and PVR manager 1576. The user interface 1583 transmits a user's input to a system through the UI manager 1582. The video post processor 1584 blends a video stream, a middleware application, an EPG, and all sorts of UI widgets to display the blended result on a screen. The audio post processor 1585 outputs an audio stream as sound in connection with function such as volume control and mute.

Now, the tuner/demodulator 1511b, GSE multiplexer 1512, and TS multiplexer 1513 is described as frontend extension module.

This front extension module receives data slice multiplex-based broadcasting signal for extension stream to decode into an appropriate form according to transmission types and merge into base stream.

The service manager 1521 finds whether extension exists based on PSI/SI information. If required to receive an extension stream, the tuner/demodulator 1511b is activated to receive an extension data slice to output in a stream form. In DVB-C2, GSE or TS.

The GSE Multiplexer 1512 merges GSE stream with base GSE stream. The merge is performed by multiplexing extension stream according to clock, on the basis of restored null packet after reception of C2 PLP.

The TS Multiplexer 1513 merges TS stream with base TS stream. The merge is performed by multiplexing extension stream according to clock, on the basis of restored null packet after reception of C2 PLP.

As described above, the present invention has an effect of providing appropriate service according to whether extension stream exists to a receiver by signaling in consideration of data slice multiplex in a DTV broadcasting method adopting a channel bonding method.

Then, another embodiment of the present invention is described below. As discussed above referring to Figs. 2 to 4, the multi-PLP/multi-data slice/single-TS structure is more rational.

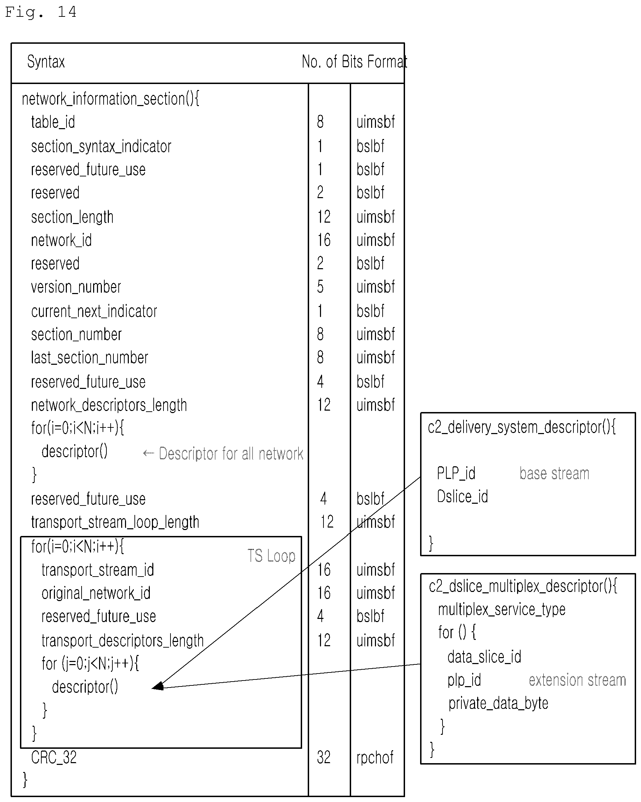

Fig. 14 shows a structure for signaling the multi-PLP/multi-data slice/single-TS structure. TS loop is included in Network Information Table (NIT) for signaling configuration of TS in Digital Video Broadcasting-Service Information (DVB-SI). In this case, c2dsd (c2_delivery_system_descriptor) is attached to connect PLP_id + data slice_id corresponding to each TS. The present invention optionally introduces c2_dslice_multiplex_descriptor to signal additional PLP_id + data slice_id for the extension stream therein, enabling the multi-PLP/multi-data slice/singleTS structure described above.

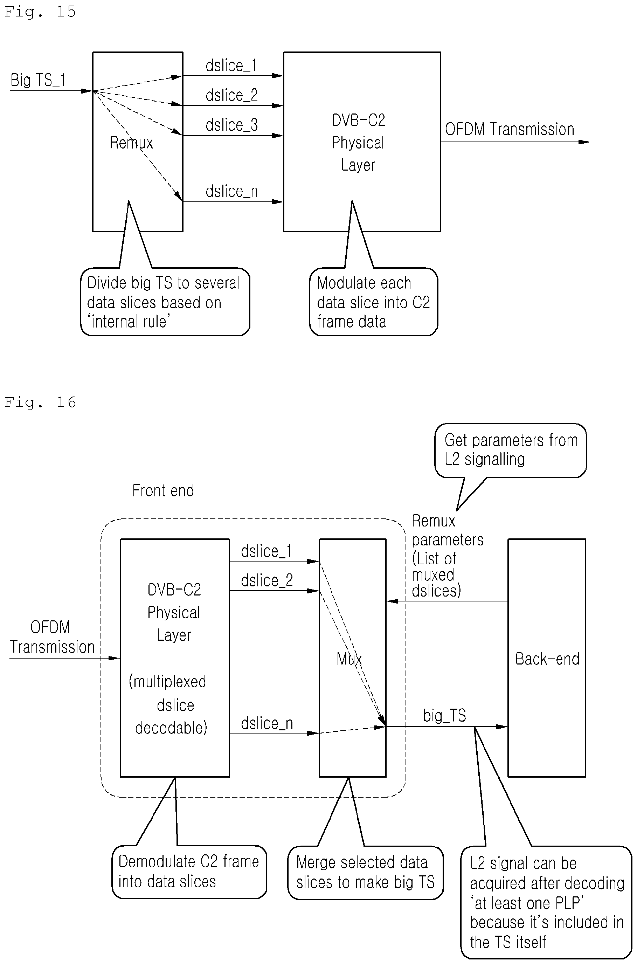

Fig. 15 is a block diagram illustrating supporting of data slice multiplex of a transmitting side according to an embodiment of the present invention. A big TS is divided into multiple data slices (dslice_1, dslice_2, dslice_3,..., dslice_n) based on internal rule, and each of data slices is modulated into c2 frame data to be transmitted.

Fig. 16 is a block diagram illustrating supporting of data slice multiplex of a receiving side according to an embodiment of the present invention. If a back-end requests for necessary data slice list from a front-end according to muxed slice information, the front-end receives a signal, and multiplexes the data slices of the list to transmit to the back-end in a TS form.

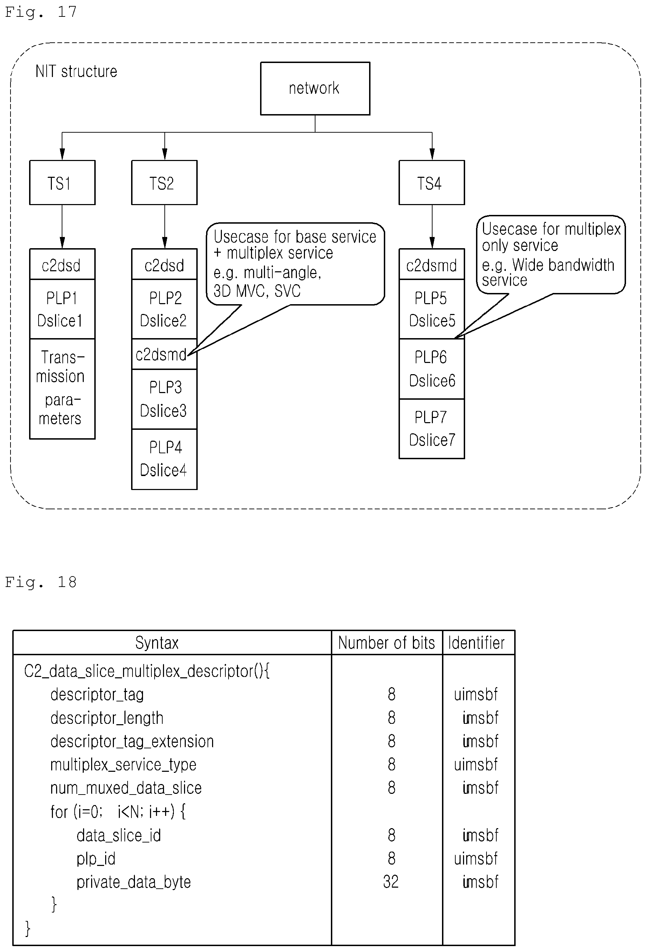

Fig. 17 shows a TS loop configuration method of NIT according to an embodiment of the present invention.
1. Only c2dsd: this corresponds to a general c2data slice, and a stream that all the basic receiver and mux-correspondence receiver can receive.
2. c2dsd+c2dsmd: this corresponds to a stream that can be served as only base plp in the basic receiver, but can be extensively served as base+extension plp in the mux-correspondence receiver. For example, the c2dsmd can be served for multi-angle (basic angle + other angle), 3D MVC (base view + 3D view), SVC (low resolution + high resolution) etc.
3. c2dsmd: this corresponds to a stream that is ignored in the basic receiver and is served as extension plp in the mux-correspondence receiver. For example, this can be served for wide bandwidth service (for example, > 8MHz).

Fig. 18 shows detailed structure of c2_dslice_multiplex_descriptor according to an embodiment of the present invention. The meanings of the respective fields are as follows.
- multiplex_service_type: this field informs the use case of data slice multiplexing.
- num_muxed_data_slice: this field indicates number of multiplexed data slices.
- data_slice_id: this field indicates identifier of data slice.
- plp_id: this field should exist because data_slice_id cannot exist by itself. Basically plp type for data multiplexing is single plp with single data slice.
- Private_data_byte: this field supplies extra information according to multiplex_service_type. For example, INT PID for internet service, angle information for multi-angle service, stereoscopic stream for MVC, and higher resolution stream for SVC.

Detailed types of multiplex_service_type are shown in Fig. 7, which may be set to simple bandwidth extension (ex, for data service), SVC extension, and 3D extension (MVC).

### [SVC_slice_info]

- layer_type: this indicates which number of extension stream is in SVC. See Fig. 8.
- scalability_type: this indicates what method is used among scalability applied in the SVC for coding. See Fig. 9.

### [3D_slice_info]

- priority_id: this provides information on which is selected from receivable extension streams when multi-view output function of 3D TV receiver is restricted. For example, two streams having higher priority are selected for decoding and outputting in a receiver having a stereoscopic display. A lower priority_id value means higher priority, which may not be redundant in regard to streams constituting the same service.
- left_right_flag: this indicates whether Extended View video stream is right or left on the basis of base view. If it is a left view on the basis of the base view, the value is '0', and if it is a right view, the value is '1'. In the base view (priority_id=0), this field is ignored.
- view_position: this indicates which number of left or right camera has recorded in a horizontal direction on the basis of the base view, or which number of multi-view plane data is outputted to. This field has no meaning in the stereoscopic video stream.

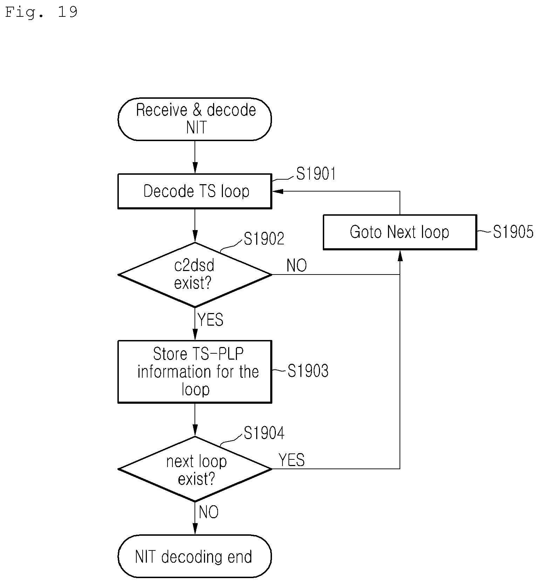

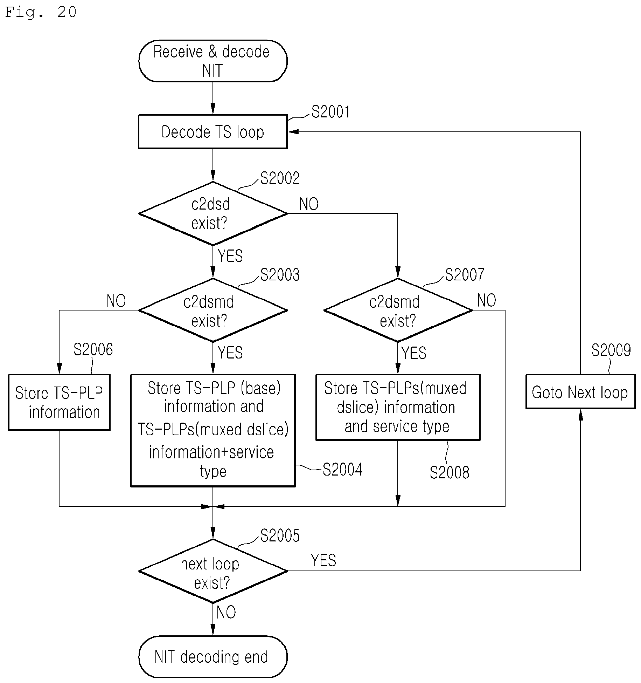

Figs. 19 and 20 are flowcharts illustrating a process of searching broadcasting services in a receiver system according to an embodiment of the present invention. Fig. 19 is a flowchart of a basic receiver, and Fig. 20 is a flowchart of a multiplex-correspondence receiver.

First, a c2 signal is inputted when a tuner tunes channel. A receiver receives L1 signaling data transmitted identically regardless of tuning frequency in a signal as shown in Fig. 1 transmitted based on the c2 signal. The total configuration of data slices, PLP configuration included in each data slice and L2 signaling data are found from the Li signaling data. A PLP including L2 signaling data is received, which includes PSI/SI information such as NIT.

A network id is verified when NIT is received. TS loop is analyzed to verify plp_id/dslice_id connection information of tsid and c2dsd of each TS. Thus, the connection structure of network ∼ TS ∼ PLP ∼ data slice is found (S1901 and S2001). It is checked whether c2dsd exist or not (S1902 and S2002). If there is no c2dsd, then a basic receiver decodes a next loop (S1905), and a multiplex-correspondence receiver passes to S2007.

In a receiver supporting dslice_multiplex, c2_dslice_multiplex_descriptor is checked (S2003 and S2007). It is verified whether the receiver supports a corresponding extension stream type, and information on plp_id and dslice_id is decoded. Based on this, related information for connection structure of PLP ∼ data slice and reception corresponding to the extension stream of corresponding TS is found.

Based on the corresponding structure, tsid/onid of TS corresponding to each service, PLP information on the corresponding TS transmission, and data slice information on the corresponding PLP transmission are together stored in a channel DB (S1903, S2004, S2006, and S2008). At the S1903 and S2006, TS-PLP (base) information is stored. At the S2004, TS-PLP (base) information, and TS-PLPs (muxed dslice) information and service type are stored. At the S2008, TS-PLPs (muxed dslice) information and service type are stored.

Then, at the S1904, it is checked whether next loop exists, and if next loop is exist, go to S1905. And at the S2005, it is checked whether next loop exists, and if next loop is exist, go to S2009.

When TS is received from the PLP and the extension stream is transmitted, the received stream is decoded according to the types such as SVC and 3D.

Watching service starts. During service, a basic receiver receives TS corresponding to a loop where information on c2dsd exists, and a multiplex-correspondence receiver receives general broadcasting/mux-broadcasting selectively in case of TS loop: c2dsd+c2dsmd, and receives mux-broadcasting in case of TS loop: c2dsmd only.

As discussed above referring to Fig. 13, the receiver of this embodiment may include the frontend unit 1510, service managing unit 1520, File Delivery over Unidirectional Transport (FLUTE) processing unit 1530, metadata processing unit 1540, Middleware (M/W) processing unit 1550, Audio/Video (AN) processing unit 1560, Personal Video Recorder (PVR) processing unit 1570, and Input/Output (I/O) processing unit 1580.

Then, as another embodiment of the present invention, the C2dsd can be defined as described in Fig. 11. Fig. 11 shows another example of the C2dsd with detailed syntax.

The C2dsd of Fig. 11 is configured as follows.
- descriptor_tag: This 8-bit field informs which a descriptor is, and has a unique value. However, because a dvb descriptor list representable with 8 bits is full, this value defines 0x7F and uses a descriptor_tag_extension.
- descriptor_length: This 8-bit field informs the entire length of a descriptor.
- descriptor_tag_extension: This 8-bit field informs the kind of a descriptor.
- PLP_id: This 8-bit field uniquely identifies a data PLP within a C2 system. This represents the ID of a PLP to which a stream represented by a transport_stream_id in the TS loop of the NIT including a descriptor is transmitted.
- data_slice_id: This 8-bit field uniquely identifies a data slice within a C2 system. This informs to which data slice the PLP of a corresponding plp_id is transmitted.
- c2_system_id: This 16-bit field uniquely identifies a C2 system. This represents one independent C2 transmission network. A data_slice_id and a plp_id are uniquely defined in the c2_system_id.
- c2_system_tuning_frequency: This 32-bit field indicates the frequency value. The coding range is from minimum 1 Hz (0x00000001) up to a maximum of 4,294,967,295 Hz (0xFFFFFFFF). This data field gives a tuning frequency of a C2 system, where a complete preamble is transmitted within the tuning window. Generally the c2_system_tuning_frequency is the center frequency of a C2 system, but it may deviate from the center frequency in case notches exist in this area.
- Active_OFDM_symbol_duration: This 3-bit field indicates the duration of the active Orthogonal Frequency Division Multiplexing (OFDM) symbol and may be described as Fig. 12. Fig. 12 shows an example of signaling format for the active OFDM symbol duration values. The duration of the active OFDM symbol may be 448 µm at 4k FFT mode for 8 MHz bandwidth systems. The duration of the active OFDM symbol may be 597 µm at 4k FFT mode for 6 MHz bandwidth systems. And, the duration of the active OFDM symbol for 6MHz bandwidth systems may be denoted as 448 x (8/6) µ or 597.33 µs more precisely
- guard_interval: This 3-bit field indicates the guard interval and may be described as Fig. 13. Fig. 13 shows an example of signaling format for the guard interval values. The guard interval value may be 1/128 or 1/64.

In the C2dsd described in Fig. 11, the fields from c2_system_tuing_frequency field to reserved field, immediately following the c2_system_id field, may occur only once per C2 system. Because the parameters are uniquely applicable to all data slices carried over a particular C2 system. The presence or absence of that part can be derived from the descriptor_length field. For example, in the absence of the fields from c2_system_tuing_frequency field to reserved field, the descriptor_length may be 0x07, otherwise a larger value applies.

Next, as another embodiment of the present invention, the C2dsd can be defined except an identifier of a data slice (data_slice_id) from the descriptor shown in Fig. 11. As described above, the configuration information of the data slice can be obtained by Layer 1 (L1) signaling that has the same information at anywhere within a DVB-C2 transmission band. L1 signaling data provide information comprising the total number and bands of data slices, the number of PLPs and PLP structure information included in each data slice. That is, data slice related information corresponding to the PLP is provided via and derived from Layer 1 signaling. Therefore, an identifier of data slice can be omitted in the C2dsd when the identifier of the data slice corresponding to the identifier of the PLP is provided via and derived from Layer 1 signaling.

Accordingly, the C2 delivery system descriptor (C2dsd) can be defined with descriptor_tag, descriptor_length, description_tag_extension, plp_id, and c2_system_id fields. The C2dsd maps a Transport Stream being signaled with the NIT, and heading the TS descriptor loop, to the corresponding C2 system (C2_system_id) and the PLP (plp_id) that carries this Transport Stream within the C2 system. That is, the C2 delivery system descriptor (C2dsd) in the TS loop of the NIT maps transport streams to data PLPs in data slices of C2 systems. And the C2dsd may further comprise c2_system_tuning_frequency field, active_OFDM_symbol_duration field described in Fig. 12, and guard_interval field described in Fig. 13.

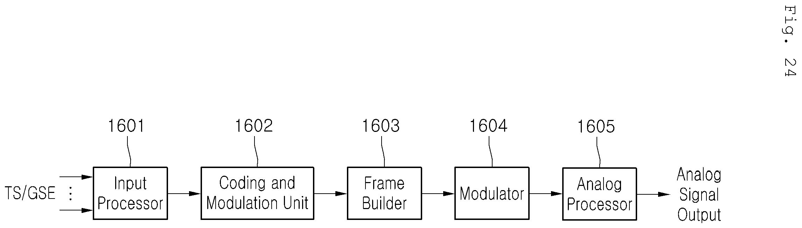

Fig. 24 shows an apparatus for transmitting broadcasting signal according to another embodiment of the present invention.

Referring to Fig. 24, the transmitter according to this embodiment includes an input processor 1601, a coding and modulation unit 1602, a frame builder 1603, a modulator 1604, and an analog processor 1605.

Inputs may comprise a number of MPEG-TS streams or Generic Stream Encapsulation (GSE) streams. The input processor 1601 may add transmission parameters to input stream and perform scheduling for the coding and modulation unit 1602.

The coding and modulation unit 1602 may add redundancy and interleave data for transmission channel error correction. That is, the coding and modulation unit 1602 may be configured to encode a transport stream using an error-correction encoding scheme and interleave bits of the error-correction-encoded transport stream. For example, the coding and modulation unit 1602 may be a Bit Interleaved Coding and Modulation (BICM) unit.

The frame builder 1603 may build frames by adding physical layer signaling information and pilots. That is, the frame builder 1603 may be configured to map the interleaved bits of the transport stream to symbols of a physical layer pipe (PLP). The frame builder 1603 may be configured to allocate the symbols of the PLP to a signal frame, and arrange layer-2 information including a network information table (NIT) having an identifier of a physical layer pipe (PLP_id) for the base stream and extension stream and an identifier of a C2 system (C2_system_id) corresponding to the transport stream in the signal frame.

The modulator 1604 may perform modulation on input symbols in efficient methods. For example, the modulator 1604 may be configured to modulate the signal frame by an Orthogonal Frequency Division Multiplexing (OFDM) method.

The analog processor 1605 may perform various processes for converting input digital signals into output analog signals.

In the embodiment of the present invention, a C2 delivery system descriptor (C2dsd) including the identifier of a physical layer pipe (PLP_id) for the base stream and an identifier of a C2 system (C2_system_id) in a TS loop of the NIT maps a transport stream to the data PLP in a data slice of the C2 system. In the embodiment, PLP related information corresponding to the data slice can be provided via and derived from layer-1 signaling.

In the embodiment of the present invention, a C2_dslice_multiplex_descriptor (C2dsmd) including the identifier of a physical layer pipe (PLP_id) for the extension stream and an identifier of a C2 system (C2_system_id) in a TS loop of the NIT maps a transport stream to the data PLP in a data slice of the C2 system. In the embodiment, PLP related information corresponding to the data slice can be provided via and derived from layer-1 signaling.

For example, where the extension stream is used for one of multi angle service, 3 Dimensional (3D) service using Multi-view Video Coding (MVC), and High Definition (HD) service using Scalable Video Coding (SVC).

That is, as described above, the C2 delivery system descriptor (C2dsd) and C2_dslice_multiplex_descriptor (C2dsmd) map a transport stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

The C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this embodiment, for example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this embodiment, for example, the guard interval value may be 1/128 or 1/64.

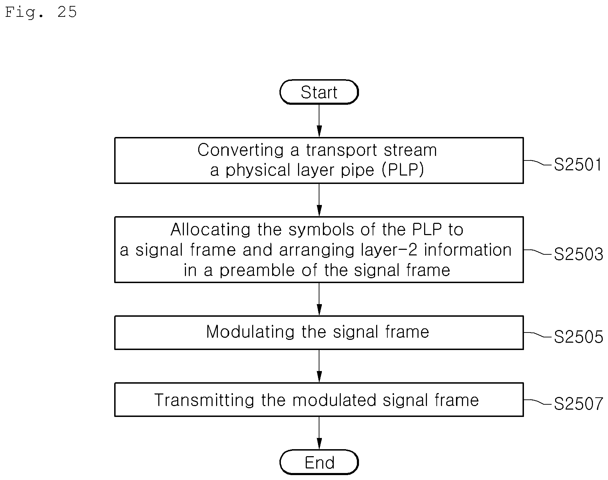

Fig. 25 is a flow chart illustrating a method of transmitting broadcasting signal according to another embodiment of the present invention.

Referring to Fig. 25, a transport stream is converted to a physical layer pipe (PLP) (S2501). Then, the symbols of the PLP are allocated to a signal frame and layer-2 information is arranged in a preamble of the signal frame (S2503). The layer-2 may include a network information table (NIT) having an identifier of a physical layer pipe (PLP_id) for the base stream and extension stream, and an identifier of a C2 system (C2_system_id) corresponding to the transport stream in the signal frame.

The signal frame is modulated (S2505), for example, by an Orthogonal Frequency Division Multiplexing (OFDM) method, and the modulated signal frame is transmitted (S2507).

In this embodiment of the present invention, a C2 delivery system descriptor (C2dsd) including the identifier of a physical layer pipe (PLP_id) for the base stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

That is, as described above, the C2 delivery system descriptor (C2dsd) maps a transport stream of the base stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this embodiment, for example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this embodiment, for example, the guard interval value may be 1/128 or 1/64.

In this embodiment of the present invention, a C2_dslice_multiplex_descriptor (C2dsmd) including the identifier of a physical layer pipe (PLP_id) for the extension stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

For example, where the extension stream is used for one of multi angle service, 3 Dimensional (3D) service using Multi-view Video Coding (MVC), and High Definition (HD) service using Scalable Video Coding (SVC).

That is, as described above, the C2_dslice_multiplex_descriptor (C2dsmd) maps a transport stream of the extension stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

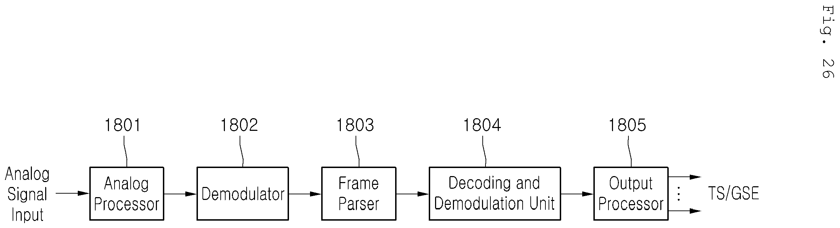

Fig. 26 shows an apparatus for receiving broadcasting signal according to another embodiment of the present invention.

Referring to Fig. 26, the receiver according to this embodiment includes an analog processor 1801, a demodulator 1802, a frame parser 1803, a decoding and demodulation unit 1804, and an output processor 1805.

Received signal is converted into digital signal at the analog processor 1801. The demodulator 1802 converts received signal from the analog processor 1801 into data in frequency domain. That is, the demodulator 1802 may be configured to demodulate received signals including a signal frame, for example, by use of an Orthogonal Frequency Division Multiplexing (OFDM) method, and output the signal frame.

The frame parser 1803 may remove pilots and headers and enable selection of service information that needs to be decoded. That is, the frame parser 1803 may be configured to parse a network information table (NIT) including an identifier of a physical layer pipe (PLP_id) for the base stream and extension stream, and an identifier of a C2 system (C2_system_id) from layer-2 information of the signal frame, and obtain the PLP in the signal frame corresponding to the PLP_id and C2_system_id.

The decoding and demodulation unit 1804 may correct errors in the transmission channel. The decoding and demodulation unit, for example, a BICM demodulation unit may be configured to obtain a transport stream by converting the PLP. The output processor 1805 may restore the originally transmitted service stream and timing information.

In this embodiment of the present invention, a C2 delivery system descriptor (C2dsd) including the identifier of a physical layer pipe (PLP_id) for the base stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

That is, as described above, the C2 delivery system descriptor (C2dsd) maps a transport stream of the base stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) in the NIT may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this embodiment, for example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this embodiment, for example, the guard interval value may be 1/128 or 1/64.

In this embodiment of the present invention, a C2_dslice_multiplex_descriptor (C2dsmd) including the identifier of a physical layer pipe (PLP_id) for the extension stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

For example, where the extension stream is used for one of multi angle service, 3 Dimensional (3D) service using Multi-view Video Coding (MVC), and High Definition (HD) service using Scalable Video Coding (SVC).

That is, as described above, the C2_dslice_multiplex_descriptor (C2dsmd) maps a transport stream of the extension stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

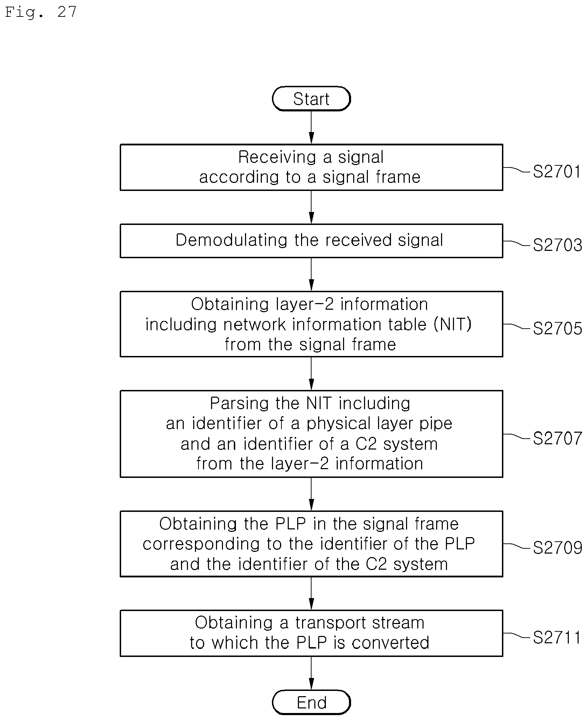

Fig. 27 is a flow chart illustrating a method of receiving broadcasting signal according to another embodiment of the present invention.

Referring to Fig. 27, a signal according to a signal frame is received (S2701). Then the received signal is demodulated (S2703), for example, by use of an Orthogonal Frequency Division Multiplexing (OFDM) method.

The layer-2 information including network information table (NIT) is obtained from the signal frame (S2705), and the NIT including an identifier of an identifier of a physical layer pipe (PLP_id) for the base stream and extension stream, and an identifier of a C2 system (C2_system_id) is parsed from the layer-2 information of the signal frame (S2707).

The PLP in the signal frame corresponding to the identifier of a physical layer pipe (PLP_id) and identifier of a C2 system (C2_system_id) is obtained (S2709), and a transport stream to which the PLP is converted is obtained (S2711).

In this embodiment of the present invention, a C2 delivery system descriptor (C2dsd) including the identifier of a physical layer pipe (PLP_id) for the base stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

That is, as described above, the C2 delivery system descriptor (C2dsd) maps a transport stream of the base stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the C2 delivery system descriptor (C2dsd) may comprise the descriptor_tag, descriptor_length, descriptor_tag_extension, plp_id, and C2_system_id fields. The C2 delivery system descriptor (C2dsd) may further comprises a tuning frequency of C2 system, duration of the active OFDM symbol (active_OFDM_symbol_duration), and guard interval (guard_interval) fields.

In this embodiment, for example, the duration of the active OFDM symbol may be 448 µs (at 4k FFT mode for 8MHz bandwidth CATV systems) or 597 µs (at 4k FFT mode for 6MHz bandwidth CATV systems). And, the duration of the active OFDM symbol for 6MHz bandwidth systems may be denoted as 448 x (8/6) µs or 597.33 µs more precisely. Then, in this embodiment, for example, the guard interval value may be 1/128 or 1/64.

In this embodiment of the present invention, a C2_dslice_multiplex_descriptor (C2dsmd) including the identifier of a physical layer pipe (PLP_id) for the extension stream and the identifier of a C2 system (C2_system_id) in a TS loop of the NIT maps the transport stream to the data PLP in a data slice of the C2 system. In the embodiment, PLP related information corresponding to the data slice can be provided via and derived from layer-1 signaling.

For example, where the extension stream is used for one of multi angle service, 3 Dimensional (3D) service using Multi-view Video Coding (MVC), and High Definition (HD) service using Scalable Video Coding (SVC).

That is, as described above, the C2_dslice_multiplex_descriptor (C2dsmd) maps a transport stream of the extension stream being signaled with the NIT, and heading the TS descriptor loop, to the corresponding C2 system (C2_system_id) and the PLP (PLP_id) that carries this transport stream within the C2 system. And, data slice related information in the C2 system is provided via and derived from layer-1 signaling.

As described above, the present invention provides information associated with the data slice and the PLP to the receiver through a PSI/SI signaling scheme in a cable DTV broadcasting scheme using a channel bonding scheme, and thus can include the data slice and the PLP in the network-service-package connection structure of the existing PSI/SI while maximally using the connection structure. The present invention can maximize the applicability of a PSI/SI controller in the existing system.

It will be apparent to those skilled in the art that various modifications and variations can be made in the present invention without departing from the invention.

## Claims

1. A method of receiving broadcasting signal, the method comprising:
receiving the broadcasting signal and demodulating the received broadcasting signal by an Orthogonal Frequency Division Multiplexing, OFDM, method;
obtaining a signal frame from the demodulated broadcasting signal, wherein the obtained signal frame is divided into a plurality of data slices of a variable bandwidth, wherein at least one data slice carries at least one Physical Layer Pipe, PLP, wherein the obtained signal frame includes L1, Layer-1 information including information indicating total number of the data slices and wherein a specific PLP includes L2, Layer-2 information having a network information table, NIT, wherein each PLP carries a output stream;
obtaining the L2 information from the obtained signal frame to detect the NIT based on the L1 information, wherein the NIT includes a descriptor mapping the output stream to corresponding PLP in a data slice, the descriptor having an identifier of each data slice, an identifier of each PLP and an identifier of a current system;
obtaining PLP in the obtained signal frame according to the detected NIT to convert data in the PLP to the output stream, wherein the output stream carries one or more services.

2. The method according to claim 1, wherein the L1 information further includes PLP related information corresponding data slice.

3. The method according to claim 1, wherein the output stream carries at least one of multi angle services, wherein the multi angle services are 3 Dimensional, 3D, service using Multi-view Video Coding, MVC, and High Definition, HD, service using Scalable Video Coding, SVC.

4. An apparatus for receiving broadcasting signal, the apparatus comprising:
a demodulator (1511a, 1511b) configured to demodulate the broadcasting signals by an Orthogonal Frequency Division Multiplexing, OFDM, method to obtain a signal frame, wherein the obtained signal frame is divided into a plurality of data slices of a variable bandwidth, wherein at least one data slice carries at least one Physical Layer Pipe, PLP, wherein the obtained signal frame includes L1, Layer-1 information including information indicating total number of the data slices and wherein a specific PLP includes L2, Layer-2 information having a network information table, NIT, wherein each PLP carries a output stream;
a frame parser (1803) configured to obtain the L2 information in the obtained signal frame to detect the NIT including a descriptor mapping the output stream to corresponding PLP in a data slice, the descriptor having an identifier of each data slice, an identifier of each PLP and an identifier of a current system, and
obtain PLP in the signal frame according to the detected NIT to convert data in the PLP to the output stream, wherein the output stream carries one or more services.

5. The apparatus according to claim 4, wherein the L1 information further includes PLP related information corresponding data slice.

6. The apparatus according to claim 4, wherein the output stream carries at least one of multi angle services, wherein the multi angle services are 3 Dimensional, 3D, service using Multi-view Video Coding, MVC, and High Definition, HD, service using Scalable Video Coding, SVC.

7. A method of transmitting broadcasting signal, the method comprising:
building a signal frame, wherein the built signal frame is divided into a plurality of data slices of a variable bandwidth, wherein at least one data slice carries at least one Physical Layer Pipe, PLP, wherein the built signal frame includes L1, Layer-1 information including information indicating total number of the data slices and wherein a specific PLP includes L2, Layer-2 information having a network information table, NIT, wherein each PLP carries an input stream; and
modulating the signal frame by an Orthogonal Frequency Division Multiplexing, OFDM, method;
wherein the NIT includes a descriptor mapping the input stream to corresponding PLP in a data slice, the descriptor having an identifier of each data slice, an identifier of each PLP and an identifier of a current system.

8. The method according to claim 7, wherein the L1 information further includes PLP related information corresponding data slice.

9. The method according to claim 7, wherein the input stream carries at least one of multi angle services, wherein the multi angle services are 3 Dimensional, 3D service using Multi-view Video Coding, MVC, and High Definition, HD, service using Scalable Video Coding, SVC.

10. An apparatus for transmitting broadcasting signal, the transmitter comprising:
a frame builder (1603) configured to build a signal frame, wherein the built signal frame is divided into a plurality of data slices of a variable bandwidth wherein at least one data slice carries at least one Physical Layer Pipe, PLP, wherein the built signal frame includes L1, Layer-1 information including information indicating total number of the data slices and wherein a specific PLP includes L2, Layer-2 information having a network information table, NIT, wherein each PLP carries an input stream; and
a modulator (1604) configured to modulate the signal frame by an Orthogonal Frequency Division Multiplexing, OFDM, method,
wherein the NIT includes a descriptor mapping the input stream to corresponding PLP in a data slice, the descriptor having an identifier of each data slice, an identifier of each PLP and an identifier of a current system.

11. The apparatus according to claim 10, wherein the L1 information further includes PLP related information corresponding data slice.

12. The apparatus according to claim 10, wherein the input stream carries at least one of multi angle services, wherein the multi angle services are 3 Dimensional, 3D, service using Multi-view Video Coding, MVC, and High Definition, HD, service using Scalable Video Coding, SVC.

## Patentansprüche

1. Verfahren zum Empfangen eines Rundfunksignals, wobei das Verfahren Folgendes umfasst:
Empfangen des Rundfunksignals und Demodulieren des empfangenen Rundfunksignals durch ein Orthogonales Frequenzmultiplex(Orthogonal Frequency Division Multiplexing, OFDM)-Verfahren;
Gewinnen eines Signalframes von dem demodulierten Rundfunksignal, wobei der gewonnene Signalframe in mehrere Datenschichtbilder variabler Bandbreite aufgeteilt ist, wobei wenigstens ein Datenschichtbild wenigstens eine Physical Layer Pipe (PLP) überträgt, wobei der gewonnene Signalframe L1 Layer-1-Informationen enthält, die Informationen beinhalten, die eine Gesamtzahl der Datenschichtbilder anzeigen, und wobei eine spezielle PLP L2 Layer-2-Informationen enthält, die eine Netzwerkinformationentabelle (Network Information Table, NIT) aufweisen, wobei jede PLP einen Ausgangsdatenstrom überträgt;
Gewinnen der L2-Informationen von dem gewonnenen Signalframe, um die NIT auf der Grundlage der L1-Informationen zu detektieren, wobei die NIT einen Deskriptor enthält, der den Ausgangsdatenstrom auf entsprechende PLP in einem Datenschichtbild abbildet, wobei der Deskriptor einen Bezeichner jedes Datenschichtbilds, einen Bezeichner jeder PLP und einen Bezeichner eines gegenwärtigen Systems aufweist;
Gewinnen von PLP in dem gewonnenen Signalframe in Abhängigkeit von der erfassten NIT, um Daten in den PLP in den Ausgangsdatenstrom umzuwandeln, wobei der Ausgangsdatenstrom einen oder mehrere Dienste überträgt.

2. Verfahren nach Anspruch 1, wobei die L1-Informationen ferner PLP betreffende Informationen beinhalten, die dem Datenschichtbild entsprechen.

3. Verfahren nach Anspruch 1, wobei der Ausgangsdatenstrom wenigstens einen von Mehrfachblickwinkel-Diensten überträgt, wobei die Mehrfachblickwinkel-Dienste ein dreidimensionaler (3D) Dienst, der Mehrfachansichtsvideocodierung (Multi-view Video Coding, MVC) verwendet, und ein Hochauflösender (HD) Dienst sind, der Skalierbare Videocodierung (Scalable Video Coding, SVC) verwendet.

4. Vorrichtung zum Empfangen eines Rundfunksignals, wobei die Vorrichtung enthält:
einen Demodulator (1511a, 1511b), der dazu eingerichtet ist, die Rundfunksignale durch ein Orthogonales Frequenzmultiplex(Orthogonal Frequency Division Multiplexing, OFDM)-Verfahren zu demodulieren, um einen Signalframe zu gewinnen, wobei der gewonnene Signalframe in mehrere Datenschichtbilder variabler Bandbreite aufgeteilt ist, wobei wenigstens ein Datenschichtbild wenigstens eine Physical Layer Pipe (PLP) überträgt, wobei der gewonnene Signalframe L1 Layer-1-Informationen enthält, die Informationen beinhalten, die eine Gesamtzahl der Datenschichtbilder anzeigen, und wobei eine spezielle PLP L2 Layer-2-Informationen enthält, die eine Netzwerkinformationentabelle (Network Information Table, NIT) beinhalten, wobei jede PLP einen Ausgangsdatenstrom überträgt;
einen Frameanalysierer (1803), der dazu eingerichtet ist, die L2-Informationen in dem gewonnenen Signalframe zu gewinnen, um die NIT zu detektieren, die einen Deskriptor enthält, der den Ausgangsdatenstrom auf entsprechende PLP in einem Datenschichtbild abbildet, wobei der Deskriptor einen Bezeichner jedes Datenschichtbilds, einen Bezeichner jeder PLP und einen Bezeichner eines gegenwärtigen Systems aufweist, und
Gewinnen von PLP in dem Signalframe in Abhängigkeit von der erfassten NIT, um Daten in den PLP in den Ausgangsdatenstrom umzuwandeln, wobei der Ausgangsdatenstrom einen oder mehrere Dienste überträgt.

5. Vorrichtung nach Anspruch 4, wobei die L1 Informationen ferner PLP betreffende Informationen beinhalten, die einem Datenschichtbild entsprechen.

6. Vorrichtung nach Anspruch 4, wobei der Ausgangsdatenstrom wenigstens einen von Mehrfachblickwinkel-Diensten überträgt, wobei die Mehrfachblickwinkel-Dienste ein dreidimensionaler (3D) Dienst, der Mehrfachansichtsvideocodierung (Multi-view Video Coding, MVC) verwendet, und ein Hochauflösender (HD) Dienst sind, der Skalierbare Videocodierung (Scalable Video Coding, SVC) verwendet.

7. Verfahren zum Senden eines Rundfunksignals, wobei das Verfahren Folgendes umfasst:
Aufbauen eines Signalframes, wobei der aufgebaute Signalframe in mehrere Datenschichtbilder variabler Bandbreite aufgeteilt ist, wobei wenigstens ein Datenschichtbild wenigstens eine Physical Layer Pipe (PLP) überträgt, wobei der aufgebaute Signalframe L1 Layer-1-Informationen enthält, die Informationen beinhalten, die eine Gesamtzahl der Datenschichtbilder anzeigen, und wobei eine spezielle PLP L2 Layer-2-Informationen enthält, die eine Netzwerkinformationentabelle (Network Information Table, NIT) aufweisen, wobei jede PLP einen Eingangsstrom überträgt; und
Modulieren des Signalframes durch ein Orthogonales Frequenzmultiplex(Orthogonal Frequency Division Multiplexing, OFDM)-Verfahren;
wobei die NIT einen Deskriptor enthält, der den Eingangsstrom auf entsprechende PLP in einem Datenschichtbild abbildet, wobei der Deskriptor einen Bezeichner jedes Datenschichtbilds, einen Bezeichner jeder PLP und einen Bezeichner eines gegenwärtigen Systems aufweist.

8. Verfahren nach Anspruch 7, wobei die L1 Informationen ferner PLP betreffende Informationen beinhalten, die einem Datenschichtbild entsprechen.

9. Verfahren nach Anspruch 7, wobei der Eingangsstrom wenigstens einen von Mehrfachblickwinkel-Diensten überträgt, wobei die Mehrfachblickwinkel-Dienste ein dreidimensionaler (3D) Dienst, der Mehrfachansichtsvideocodierung (Multi-view Video Coding, MVC) verwendet, und ein Hochauflösender (HD) Dienst sind, der Skalierbare Videocodierung (Scalable Video Coding, SVC) verwendet.

10. Vorrichtung zum Senden eines Rundfunksignals, wobei der Sender enthält:
eine Frameaufbauvorrichtung (1603), die dazu eingerichtet ist, einen Signalframe aufzubauen, wobei der aufgebaute Signalframe in mehrere Datenschichtbilder variabler Bandbreite aufgeteilt ist, wobei wenigstens ein Datenschichtbild wenigstens eine Physical Layer Pipe (PLP) überträgt, wobei der aufgebaute Signalframe L1 Layer-1-Informationen enthält, die Informationen beinhalten, die eine Gesamtzahl der Datenschichtbilder anzeigen, und wobei eine spezielle PLP L2 Layer-2-Informationen enthält, die eine Netzwerkinformationentabelle (Network Information Table, NIT) aufweisen, wobei jede PLP einen Eingangsdatenstrom überträgt; und
einen Modulator (1604), der dazu eingerichtet ist, den Signalframe durch ein Orthogonales Frequenzmultiplex(Orthogonal Frequency Division Multiplexing, OFDM)-Verfahren zu modulieren,
wobei die NIT einen Deskriptor enthält, der den Eingangsdatenstrom auf entsprechende PLP in einem Datenschichtbild abbildet, wobei der Deskriptor einen Bezeichner jedes Datenschichtbilds, einen Bezeichner jeder PLP und einen Bezeichner eines gegenwärtigen Systems aufweist.

11. Vorrichtung nach Anspruch 10, wobei die L1 Informationen ferner PLP betreffende Informationen beinhalten, die einem Datenschichtbild entsprechen.

12. Vorrichtung nach Anspruch 10, wobei der Eingangsdatenstrom wenigstens einen von Mehrfachblickwinkel-Diensten überträgt, wobei die Mehrfachblickwinkel-Dienste ein dreidimensionaler (3D) Dienst, der Mehrfachansichtsvideocodierung (Multi-view Video Coding, MVC) verwendet, und ein Hochauflösender (HD) Dienst sind, der Skalierbare Videocodierung (Scalable Video Coding, SVC) verwendet.

## Revendications

1. Procédé de réception d'un signal de télédiffusion, le procédé comprenant :
la réception du signal de télédiffusion et la démodulation du signal de télédiffusion reçu par un procédé de multiplexage à répartition en fréquence orthogonale, OFDM ;
l'obtention d'une trame de signal à partir du signal de télédiffusion démodulé, dans lequel la trame de signal obtenue est divisée en une pluralité de tranches de données d'une largeur de bande variable, dans lequel au moins une tranche de données transporte au moins un pipeline de couche physique, PLP, dans lequel la trame de signal obtenue inclut des informations L1 (informations de couche 1) incluant des informations indiquant un nombre total des tranches de données et dans lequel un pipeline PLP spécifique inclut des informations L2 (informations de couche 2) ayant une table NIT (table d'informations de réseau) dans lequel chaque pipeline PLP transporte un flux de sortie ;
l'obtention des informations L2 à partir de la trame de signal obtenue pour détecter la table NIT sur la base des informations L1, dans lequel la table NIT inclut un descripteur associant le flux de sortie à un pipeline correspondant dans une tranche de données, le descripteur ayant un identifiant de chaque tranche de données, un identifiant de chaque pipeline PLP et un identifiant d'un système courant ;
l'obtention d'un pipeline PLP dans la trame de signal obtenue selon la table NIT détectée pour convertir des données dans le pipeline PLP vers le flux de sortie, dans lequel le flux de sortie transporte un ou plusieurs services.

2. Procédé selon la revendication 1, dans lequel les informations L1 incluent en outre des informations, relatives au pipeline PLP, correspondant à la tranche de données.

3. Procédé selon la revendication 1, dans lequel le flux de sortie transporte au moins des services multi-angles, dans lequel les services multi-angles sont un service tridimensionnel, 3D, utilisant un codage vidéo multivue, MVC, et un service haute définition, HD, utilisant un codage vidéo extensible, SVC.

4. Appareil de réception d'un signal de télédiffusion, l'appareil comprenant :
un démodulateur (1511a, 1511b) configuré pour démoduler les signaux de télédiffusion par un procédé de multiplexage à répartition en fréquence orthogonale, OFDM, pour obtenir une trame de signal, dans lequel la trame de signal obtenue est divisée en une pluralité de tranches de données d'une largeur de bande variable, dans lequel au moins une tranche de données transporte au moins un pipeline PLP (pipeline de couche physique), dans lequel la trame de signal obtenue inclut des informations L1 (informations de couche 1) incluant des informations indiquant un nombre total des tranches de données et dans lequel un pipeline PLP spécifique inclut des informations L2 (informations de couche 2) ayant une table NIT (table d'informations de réseau), dans lequel chaque PLP transporte un flux de sortie ;
un analyseur de trame (1803) configuré pour obtenir les informations L2 dans la trame de signal obtenue pour détecter la table NIT incluant un descripteur associant le flux de sortie à un pipeline PLP correspondant dans une tranche de données, le descripteur ayant un identifiant de chaque tranche de données, un identifiant de chaque pipeline PLP et un identifiant d'un système courant, et
obtenir un pipeline PLP dans la trame de signal selon la table NIT détectée pour convertir des données dans le pipeline PLP vers le flux de sortie, dans lequel le flux de sortie transporte un ou plusieurs services.

5. Appareil selon la revendication 4, dans lequel les informations L1 incluent en outre des informations, relatives au pipeline PLP, correspondant à la tranche de données.

6. Appareil selon la revendication 4, dans lequel le flux de sortie transporte au moins un des services multi-angles, dans lequel les services multi-angles sont un service tridimensionnel, 3D, utilisant un codage vidéo multivue, MVC, et un service haute définition, HD, utilisant un codage vidéo extensible, SVC.

7. Procédé de transmission d'un signal de télédiffusion, le procédé comprenant :
la génération d'une trame de signal, dans lequel la trame de signal générée est divisée en une pluralité de tranches de données d'une largeur de bande variable, dans lequel au moins une tranche de données transporte au moins un pipeline PLP (pipeline de couche physique) dans lequel la trame de signal générée inclut des informations L1 (informations de couche 1) incluant des informations indiquant un nombre total des tranches de données et dans lequel un pipeline PLP spécifique inclut des informations L2 (informations de couche 2) ayant une table NIT (table d'informations de réseau), dans lequel chaque pipeline PLP transporte un flux d'entrée ; et
la modulation de la trame de signal par un procédé de multiplexage à répartition en fréquence, OFDM ;
dans lequel la table NIT inclut un descripteur associant le flux d'entrée à un pipeline PLP correspondant dans une tranche de données, le descripteur ayant un identifiant de chaque tranche de données, un identifiant de chaque pipeline PLP et un identifiant d'un système courant.

8. Procédé selon la revendication 7, dans lequel les informations L1 incluent en outre des informations, relatives au pipeline PLP, correspondant à la tranche de données.

9. Procédé selon la revendication 7, dans lequel le flux d'entrée transporte au moins un des services multi-angles, dans lequel les services multi-angles sont un service tridimensionnel, 3D, utilisant un codage vidéo multivue, MVC, et un service haute définition, HD, utilisant un codage vidéo extensible, SVC.

10. Appareil de transmission d'un signal de télédiffusion, le transmetteur comprenant :
un générateur de trame (1603) configuré pour générer une trame de signal, dans lequel la trame de signal générée est divisée en une pluralité de tranches de données d'une largeur de bande variable dans lequel au moins une tranche de données transporte au moins un pipeline PLP (pipeline de couche physique), dans lequel la trame de signal générée inclut des informations L1 (informations de couche 1) incluant des informations indiquant un nombre total des tranches de données et dans lequel un pipeline PLP spécifique inclut des informations L2 (informations de couche 2) ayant une table NIT (table d'informations de réseau), dans lequel chaque pipeline PLP transporte un flux d'entrée ; et
un modulateur (1604) configuré pour moduler la trame de signal par un procédé de multiplexage à répartition en fréquence orthogonale, OFDM,
dans lequel la table NIT inclut un descripteur associant le flux d'entrée à un pipeline PLP correspondant dans une tranche de données, le descripteur ayant un identifiant de chaque tranche de données, un identifiant de chaque pipeline PLP et un identifiant d'un système courant.

11. Appareil selon la revendication 10, dans lequel les informations L1 incluent en outre des informations, relatives au pipeline PLP, correspondant à la tranche de données.

12. Appareil selon la revendication 10, dans lequel le flux d'entrée transporte au moins un des services multi-angle, dans lequel les services multi-angles sont un service tridimensionnel, 3D, utilisant un codage vidéo multivue, MVC, et un service haute définition, HD, utilisant un codage vidéo extensible, SVC.
